# EUROPEAN PATENT SPECIFICATION

(11) **EP 1 936 162 B1**
(45) Date of publication and mention of the grant of the patent: **13.03.2013**
(21) Application number: 07150375.9
(22) Date of filing: 21.12.2007
(51) Int. Cl.: F02D 41/00, F02D 41/02, F02D 41/36

(54) **An engine system and a method for a purge gas regeneration of an exhaust gas treatment device in a such a system**
Motorsystem und Verfahren zur Spülgasregenerierung einer Abgasbehandlungsvorrichtung in einem solchen System
Système motorisé et procédé pour une régénération de gaz de purge d'un dispositif de traitement de gaz d'échappement dans un tel système

(30) Priority: 22.12.2006 EP 06127167
(43) Date of publication of application: 25.06.2008
(73) Proprietor: Volvo Car Corporation, 405 31 Göteborg (SE)
(72) Inventor: Hermansson, Jonas, 437 32, Lindome (SE); Johnsson, Anders, 416 55, Göteborg (SE); Vollmer, Niklas, 430 31, Åsa (SE)
(74) Representative: Holmberg, Magnus

(56) References cited:
- EP-A- 0 931 923
- EP-A2- 0 869 267
- DE-A1- 10 122 061
- US-A1- 2003 224 907

## Description

### TECHNICAL FIELD

The present invention relates to a method for an exhaust gas treatment device in an engine system comprising an internal combustion engine with at least one cylinder, the engine system further comprising fuel storage means, and a fuel vapor retainer. The invention also relates to an engine system comprising an internal combustion engine comprising at least one cylinder, the engine system further comprising an exhaust gas treatment device, fuel storage means, and a fuel vapor retainer, and an engine control unit adapted to control supply control means so as to selectively allow purge gas from the fuel vapor retainer to reach the engine.

### BACKGROUND

Modern vehicles are equipped with exhaust gas treatment devices, known as catalytic converters, that convert toxic gases such as hydrocarbons (HC), carbon monoxide (CO) and nitrogen oxides (NOx) into substances such as carbon dioxide (CO2) nitrogen (N2) and water (H2O). A known problem with catalytic converters is that certain substances can remain, for example by physical or chemical adsorption, on internal surfaces of the converters, and reduce the capacity of the converters. Such detrimental adsorption is known as catalytic converter poisoning. For example, fuels, whether gasoline or diesel, for vehicle internal combustion engines, contain a relatively high amount of sulfur, typically depending on in which state or region they are provided. The sulfur creates problems for the operation of the catalyst exhaust gas treatment devices. In the engine combustion process, the sulfur is converted to sulfur oxides (SOx), which adsorbs strongly to internal surfaces of the catalyst and therefore reduces its exhaust gas treatment capacity. This process is often referred to as sulfur poisoning. Sulfur adsorption is particularly strong during low load driving conditions.

A number of catalytic converter regeneration measures to solve this problem have been suggested. It is well known that the catalytic converter can be restored from sulfur poisoning by being exposed to high temperatures.

The patent publication US6161377 suggests heating the catalytic converter by introducing secondary air into the exhaust gases, combined with providing a rich mixture to the cylinders. A disadvantage with this method is that it requires an additional component in the form of an air pump for the introduction of the secondary air. Apart from adding to the complexity and the cost of the engine system, such an air pump creates a noise, which can be disturbing to drivers and passengers in a vehicle in which the pump is installed. Further, a high exhaust gas pressure can give an excessive load to the air pump. Also, since air, according to said patent publication, is injected downstream of the engine, relatively close to the catalytic converter, there is a great risk that the fuel and air will not be fully mixed when reaching the catalytic converter. This reduces the efficiency of the regeneration method, and can cause concentration of fuel, which may result in damage of the catalytic converter.

The patent publication US6901749 discloses, in order to heat the catalytic converter, providing a rich mixture to the engine cylinders combined with adjusting the ignition timing so as to provide a relatively late ignition during the engine cycles, The idea is to allow combustion to continue in the exhaust conduit downstream of the engine cylinders in order to heat the catalytic converter. However, this measure has the disadvantage that it causes vibration and affects the drivability negatively in a vehicle, in which it is carried out. In addition, it increases the fuel consumption, and reduces the available torque of the engine.

Also, since the energy for heating the catalytic converter is transported thermally, there are substantial energy losses between the engine and the catalytic converter in the form of temperature decrease. In the case of the catalytic converter being provided relatively far from the engine, the energy losses may be such that no, or an insufficient result is provided by the measure. Also, in the case of the engine system being equipped with an exhaust turbo charger, the energy losses at the delayed ignition regeneration measure are further increased.

### SUMMARY OF THE INVENTION

It is an object of the present invention to provide optimum efficiency of an exhaust gas treatment device.

It is also an object of the present invention to improve regeneration of exhaust gas treatment devices in engine systems with internal combustion engines.

In addition, it is an object of the present invention to provide regeneration of exhaust gas treatment devices in vehicles without causing discomfort or disturbance to any person in the vehicle.

It is also an object of the present invention to minimize the effects of an exhaust gas treatment device regeneration measure on the drivability of a vehicle provided with the exhaust gas treatment device.

In addition, it is an object of the present invention to minimize the effects of an exhaust gas treatment device regeneration measure on the fuel consumption of a vehicle provided with the exhaust gas treatment device.

It is a further object of the present invention to provide regeneration of exhaust gas treatment devices in engine systems with a minimal amount of increase in the complexity of the engine system.

These objects are reached with a method of the type mentioned initially, comprising performing a purge gas exhaust gas treatment device regeneration, comprising allowing purge gas from the fuel vapor retainer into at least one of the cylinders, and inhibiting combustion in at least one of the cylinders into which purge gas is allowed.

By using purge gas from a fuel vapor retainer, air and fuel can be introduced into the inlet manifold mixed, and be thoroughly mixed with air in the cylinder(s), and be further mixed between the cylinder(s) and the catalytic converter. This provides a homogonous distribution of fuel and air across the lateral extensions of the catalytic converter, in which the mixture is combusted so as to heat the exhaust gas treatment device. The result is a very effective regeneration, and minimizing risks of the regeneration measure causing damage to the catalytic converter. This thorough regeneration is provided simply by use of purge gas from a fuel vapor retainer, without the need for additional equipment in the engine system.

Also, the regeneration method may be carried out without causing disturbance to drivers and passengers in a vehicle with the engine system. In addition, use of the invention does not lead to any vibration in a vehicle, in which it is carried out. More generally, use of the invention does not lead to any deterioration in the noise, vibration and harshness (NVH) performance of the vehicle. Further, due to the chemical transportation of energy for regeneration, there is no significant increase in the fuel consumption, and the available torque of the engine is not affected. Also, since the energy for heating the catalytic converter is transported chemically, i.e. in the air/fuel mixture, and converted to thermal energy in the catalytic converter, there are essentially no energy losses between the engine and the catalytic converter. Thus, the invention provides a very effective regeneration measure, even in a case where the catalytic converter is provided relatively far from the engine, and/or in the case of the engine system being equipped with a exhaust turbo charger.

The use of purge gas for heating exhaust gas treatment device makes the method advantageous for low load conditions, at which the exhaust gas treatment device temperature is relatively low, the normal fuel supply is relatively low, and sulfur adsorption in particularly strong.

Preferably, the step of inhibiting combustion comprises controlling ignition means at the cylinder so that combustion is inhibited. Thereby, the method is adapted to spark ignition engines, at which ignition is inhibited during at least one operative cycle of the cylinder(s) during which cycle purge gas is allowed to the cylinder, which allows after-combustion of the mixture with purge gas, i.e. allows it to pass the cylinder(s) and the exhaust manifold, and to be combusted in the exhaust gas treatment device.

Alternatively or in addition to ignition inhibition, the combustion inhibition could comprise controlling at least one exhaust valve at at least one of the cylinders into which purge gas is allowed so as to reduce or eliminate an increase in pressure in the cylinder. Thereby, a valve control system, in itself known to the person skilled in the art, can be used to open the exhaust valve(s) when at a compression stroke of the cylinder the piston is moving from the bottom dead centre to the top dead centre.

Preferably, where the engine comprises fuel injection means, the purge gas exhaust gas treatment device regeneration is performed if the existence of at least one condition indicative of a fuel injection inhibition is determined. Thereby, the regeneration is performed during a fuel cut mode of the engine, for example caused by an accelerator pedal being released by a driver of a vehicle in which the method is used. This makes it possible to provide a timing of the regeneration, at which it does not in any way interfere with other aspects of the engine operation. In a vehicle, performing the purge gas exhaust gas treatment device regeneration in situations in which there is normally a fuel cut provides a simple and effective regeneration, that may be carried out without causing disturbance to drivers and passengers, and that does not compromise output torque requirements during the vehicle operation.

It should be noted that the existence of the at least one condition indicative of a fuel injection inhibition can be determined in a variety of manners. For example, the condition can correspond to a fuel injection control parameter corresponding to no fuel injection, an accelerator pedal setting signal corresponding to a released accelerator pedal, or a requested torque parameter value corresponding to zero (or negative) requested torque, In general, any parameter related to the fuel injection control can be used to determine the condition indicative of a fuel injection inhibition. Also, the condition can be determined before a fuel cut period has commenced, for example where a released accelerator pedal signal is used as the condition, or after a fuel cut period has commenced, for example where a fuel injection control parameter corresponding to no fuel injection is used as the condition indicative of a fuel injection inhibition.

For example, if the requested torque in a vehicle is at or below a threshold value, usually a fuel cut mode, in which the fuel injection is inhibited, follows. Thus, according to one embodiment, the step of determining the existence of at least one condition indicative of a fuel injection inhibition, comprises determining a value of a control parameter corresponding to, or being related to a requested torque of the engine, and comparing the determined control parameter value with a control parameter threshold value, the determination of the existence of at least one condition indicative of a fuel injection inhibition being dependent on the comparison between the determined control parameter value and the control parameter threshold value. Preferably, it is determined that the fuel injection means are not controlled so as to inhibit fuel injection if the requested torque is above the requested torque threshold value. Usually, a zero or a negative requested torque, for example caused by an accelerator pedal being released by a driver of a vehicle in which the method is used, is followed by a fuel cut mode in which the fuel injection is inhibited. Thus, in one embodiment, the requested torque threshold value is zero.

Preferably, the method comprises estimating the contents of fuel in the fuel vapor retainer and determining, based on the estimation of the contents of fuel in the fuel vapor retainer, whether to perform the purge gas exhaust gas treatment device regeneration. Thereby, it can be established whether there is enough fuel in the fuel vapor retainer for carrying out an efficient regeneration of the exhaust gas treatment device.

Preferably, the method comprises determining during the purge gas exhaust gas treatment device regeneration the temperature of the exhaust gas treatment device, and terminating the purge gas exhaust gas treatment device regeneration if it is determined that the temperature of the exhaust gas treatment device is above a predetermined temperature limit value. Thereby, temperatures that are high enough to cause a risk of damaging the catalytic converter can be effectively avoided. It should be noted that avoiding too high catalytic converter temperatures is of outmost importance to prevent premature catalytic converter ageing.

Preferably, the method comprises determining during the purge gas exhaust gas treatment device regeneration a value of a control parameter corresponding to, or being related to a requested torque of the engine, the purge gas exhaust gas treatment device regeneration being dependent on the control parameter value determination. Thereby, the purge gas exhaust gas treatment device regeneration can be adjusted, for example as described below, to allow the engine to deliver the torque requested. In one embodiment, it is determined whether the control parameter value is above a predetermined threshold value, and the purge gas exhaust gas treatment device regeneration is terminated if it is determined that the control parameter value is above the predetermined threshold value. This makes it possible to quickly respond to torque requests based on accelerator pedal maneuverings.

Preferably, the method comprises controlling air flow control means so as to control the combustion in the exhaust gas treatment device during the purge gas exhaust gas treatment device regeneration. By adjusting the air flow, for example based on the purge gas flow and/or the hydrocarbon content of the purge gas, it can be secured that a combustible air/fuel mixture is provided to the catalytic converter during the regeneration action. Also, controlling the combustion in the exhaust gas treatment device could comprise controlling a location or a region of a maximum temperature in the exhaust gas treatment device, Thereby, as explained closer below, the air flow control means, for example comprising a throttle valve, can be used to control the temperature distribution in a longitudinal direction of the catalytic converter. By changing, during the sulfur regeneration, the location of the maximum temperature, it is possible to obtain a particularly thorough regeneration, since it can be secured that the temperature is increased sufficiently for sulfur deposit removal throughout the entire catalytic converter. Also, moving the maximum temperature in this way further reduces the risk of damaging the catalytic converter by high temperature exposure. Specially, the risk of excessive temperatures in an upstream end of the catalytic converter can be substantially reduced, so that catalytic converter damage can be effectively avoided.

Preferably, allowing purge gas from the fuel vapor retainer into at least one of the cylinders comprises controlling supply control means so as to allow purge gas from the fuel vapor retainer to reach the engine. Thereby, the supply control means can be controlled so as to allow purge gas from the fuel vapor retainer to reach an inlet duct of the engine.

Preferably, the supply control means comprises a purge gas supply pump adapted to pump purge gas to the engine. This is advantageous, specially where, as outlined above, air flow control means are controlled, during the exhaust gas treatment device regeneration, so as to control the combustion in the exhaust gas treatment device during the purge gas exhaust gas treatment device regeneration, The reason is that the purge gas can be supplied with a pressure securing that it is transported to the exhaust system even if the intake pressure is relative high due to the air flow being controlled so as to be relatively high. Without a purge gas supply pump the intake pressure might be too high for the purge gas to be transported to the engine via the intake.

The objects are also reached with an engine system according to any of the claims 13-22.

### DESCRIPTION OF THE FIGURES

Below, the invention will be described in detail with reference to the drawings, in which
- fig. 1 shows a schematic view of parts of a vehicle engine system,
- fig. 2 shows a block diagram depicting a method according to a preferred embodiment of the invention,
- fig. 3 is a schematic side view of a detail in fig. 1 with temperature distribution curves, and
- fig. 4 shows a schematic view of parts of a vehicle engine system according to an alternative embodiment of the invention.

### DETAILED DESCRIPTION

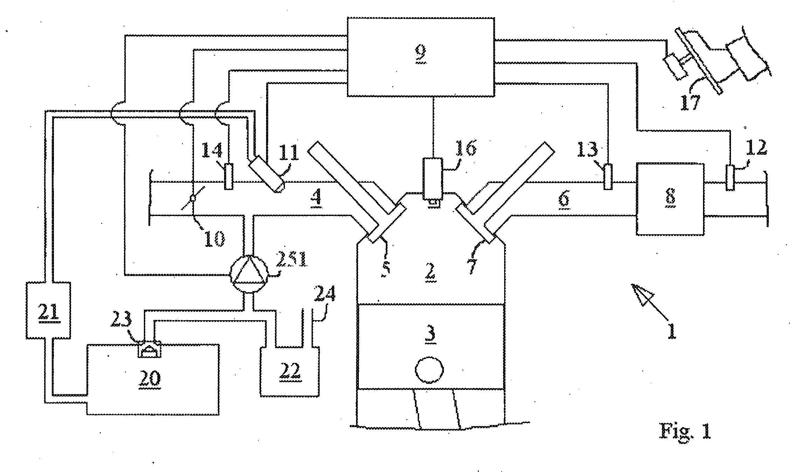

Fig. 1 shows a schematic view of parts of a vehicle engine system 1 comprising an internal combustion engine. The engine comprises at least one cylinder 2 with a reciprocating piston 3. Communication between the cylinder 2 and an inlet duct 4 is controlled by at least one inlet valve 5, and communication between the cylinder 2 and an exhaust duct 6 is controlled by at least one exhaust valve 7. Downstream from the cylinder(s) 2, an exhaust gas treatment device 8, in the form of a catalytic converter, is provided.

The engine system 1 also comprises an engine control unit (ECU) 9, which can be provided as one unit, or as more than one logically interconnected physical units. The ECU 9 is adapted to control air flow control means comprising a throttle valve 10, and fuel injection means 11 comprising at least one fuel injector 11 in the inlet duct 4. In this embodiment, where the engine presents more than one cylinder, the fuel injection can be controlled individually for each cylinder, by a fuel injector being provided at a separate portion of the inlet duct 4 communicating with the respective cylinder, (so called port fuel injection). Alternatively, as is known in the art, a fuel injector can be provided in each cylinder 2, (so called direct fuel injection). As a further alternative, one single fuel injector can be provided for more than one cylinder, or all cylinders, for example at an upstream portion of the inlet duct communicating with more than one cylinder, or all cylinders.

The ECU 9 is also adapted to receive signals from a first gas sensor 12 located downstream of the catalytic converter 8, as well as from a second gas sensor 13 located in the exhaust duct 6 between the cylinder 2 and the catalytic converter 8. The ECU 9 is adapted to determine, based on the signals from the first and second sensors 12, 13, the oxygen content in the exhaust gases upstream and downstream, respectively, of the catalytic converter 8. As is known in the art, the oxygen content in the exhaust gases is indicative of the lambda value of the air/fuel mixture provided to the engine.

In addition, the ECU 9 is also adapted to determine the engine air flow based on signals received from an air flow sensor 14 located in the inlet duct 4. As an alternative, as is known in the art, the air flow can be computed based on parameters such as the inlet manifold pressure, throttle position, engine speed, inlet temperature, and atmospheric pressure. Manners of determining the values of these parameters are known in the art, and not explained further here.

The ECU 9 is adapted to determine the temperature of the catalytic converter 8 based at least partly on the air flow, the lambda value, the ambient temperature, engine load, and engine rotational speed. As an alternative, the ECU 9 can be adapted to receive signals from a temperature sensor located in the exhaust duct 6 between the cylinder 2 and the catalytic converter 8, based on which signals, the catalytic converter temperature can be determined.

Further, at each cylinder, ignition means 16 comprising a spark plug 16 are provided and controllable by the ECU 9. Also, the ECU is adapted to adjust, as known in the art, the value of a requested torque parameter based on signals from an accelerator pedal 17 in the vehicle.

The ECU 9 is adapted to determine, based at least partly on an analysis of a signal from the first gas sensor 12, the level of sulfur poisoning of the catalytic converter 8, and whether the catalytic converter 8 is subjected to sulfur poisoning, as described in the European patent application entitled "An internal combustion engine system and a method for determining a condition of an exhaust gas treatment device in a such a system", filed by the applicant on the first filing date of the present application, and incorporated herein by reference,

Alternatively, the ECU 9 can be adapted to determine the level of sulfur poisoning of the catalytic converter, and whether the catalytic converter 8 is subjected to sulfur poisoning, by some alternative method. For example, a sulfur poisoning establishment procedure can include adjusting in the ECU 9 a sulfur oxide (SOx) adsorption counter, based on air-fuel ratio, engine operating condition, catalyst temperature, the engine rotational speed and the intake pressure.

The fuel injection means 11 communicate with fuel storage means in the form of a fuel tank 20, via a fuel pump 21. The engine system is also provided with a fuel vapor retainer in the form of a canister 22, (which could enclose carbon for retaining vaporized fuel as known in the art), which can communicate with the fuel tank 20 via a vapor vent valve 23. Further, the canister 22 is provided with a canister air inlet 24.

Supply control means in the form of a purge gas supply pump 251, controllable by the ECU 9, is adapted to pump purge gas (fuel vapors) from the canister 22 and/or the fuel tank 20 to the inlet duct 4.

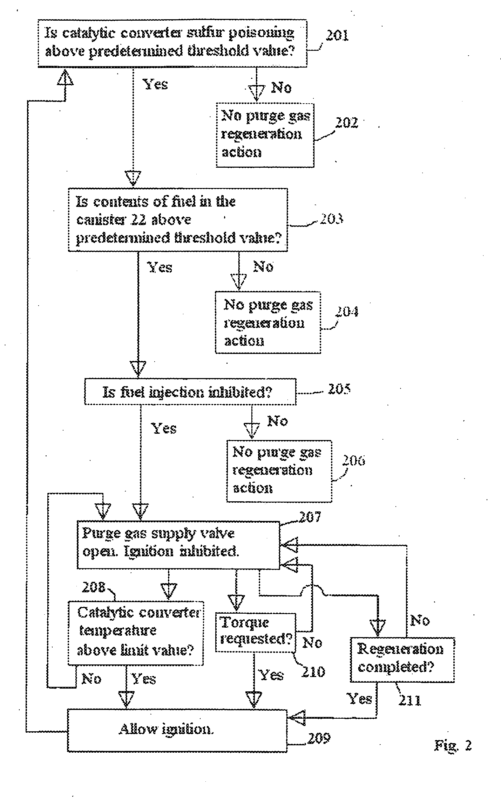

Fig. 2 depicts a method according to a preferred embodiment of the invention. The ECU 9 determines 201 whether data corresponding to the level of sulfur poisoning of the catalytic converter is above a predetermined sulfur poisoning threshold value. If it is determined that the data corresponding to the level of sulfur poisoning is not above the sulfur poisoning threshold value, it is determined 202 that no purge gas sulfur regeneration action is carried out.

If it is determined that the data corresponding to the level of sulfur poisoning is above the sulfur poisoning threshold value, it is determined 203 whether the contents of fuel in the canister 22 is above a predetermined canister level threshold value. The contents of the canister can be determined as is known in the art, for example based on measured values of lambda, injected fuel and air flow.

If it is determined that the contents of fuel in the canister 22 is below the threshold value, it is determined 204 that no purge gas sulfur regeneration action is carried out. Alternatively, if it is determined that the canister level is low, a purge gas sulfur regeneration action, a described below, can be carried out while fuel is also allowed via the fuel injection means 11.

If it is determined that the contents of fuel in the canister 22 is above the threshold value, it is determined 205 whether the fuel injection means 11 are controlled so as to inhibit fuel injection. If it is determined that the fuel injection means 11 are not controlled so as to inhibit fuel injection, it is determined 206 that no purge gas sulfur regeneration action is carried out.

If it is determined that the fuel injection means 11 are controlled so as to inhibit fuel injection, a purge gas sulfur regeneration action, herein also referred to as a purge gas exhaust gas treatment device regeneration, is carried out 207, comprising inhibiting ignition by the ignition means 16 and controlling the purge gas supply pump 251 so that fuel from the canister 22 is pumped into the inlet duct 4 so as to mix with air. The air and fuel is transported through the cylinder(s) 2 and the exhaust duct 6. During this relatively long transportation, the air and fuel is allowed to mix well to provide a substantially homogenous mixture. The mixture reaches the catalytic converter 8 where it is combusted to increase the temperature of the converter 8 in order to eliminate sulfur deposits.

During the purge gas sulfur regeneration action, the temperature of the catalytic converter 8 is monitored by the ECU 9, in a manner mentioned above. If the catalytic converter temperature rises above a predetermined temperature limit value 208, the purge gas sulfur regeneration action is terminated 209 by allowing ignition by the ignition means 16. Thereby, the purge gas supply pump 251 can be active or inactive,

During the purge gas sulfur regeneration action, the setting of the accelerator pedal 17 is monitored by the ECU 9. If it is determined 210 that the requested torque, for example due to maneuvering of the accelerator pedal, is above a predetermined threshold value, the purge gas sulfur regeneration action is terminated 209 by allowing ignition by the ignition means 16. According to one embodiment, the predetermined threshold value of the requested torque is zero.

In the case of the engine having more than one cylinder and the fuel injection can be controlled individually for each cylinder, alternatively, based on the determined value of the requested torque, the purge gas supply pump 251 can be kept active, and ignition allowed and fuel supplied in only one or some of the cylinders. Thereby the regeneration action can continue while at the same time the requested torque is provided. The amount of cylinders in which ignition and fuel injection is activated can be dependent in the value of the requested torque.

As mentioned, the ECU 9 is adapted to determine the level of sulfur poisoning of the catalytic converter, Thereby, the ECU 9 can be adapted to terminate a regeneration action when the level of sulfur poisoning has been reduced to a predetermined level. Thus, referring to fig. 2, during the purge gas sulfur regeneration action, the level of sulfur poisoning of the catalytic converter is determined 211. If it is determined that the level of sulfur poisoning has been reduced to the predetermined level, the purge gas sulfur regeneration action is terminated 209 by allowing ignition by the ignition means 16.

Also, if the sulfur regeneration action is terminated 209, for example due to the catalytic converter temperature rising above the predetermined temperature limit value, or due to a torque above a predetermined limit value being requested, the level of sulfur poisoning at the interruption of the regeneration action can be established. Thereby, the regeneration action can be "continued" in a suitable manner, once circumstances, as described above, allow such a "continuation" to take place.

In the method described above, fuel injection is closed during the purge gas regeneration, Alternatively, fuel injection can be allowed during the purge gas regeneration. Thereby, the supply of purge gas can be supplemented with injected fuel if needed to provide a suitable mixture for the regeneration.

Reference is made to fig. arid 3. The method comprises controlling the throttle valve 10 so as to control the combustion in the catalytic converter 8 during the purge gas exhaust gas treatment device regeneration. The ECU 9 is adapted to determine, in a similar manner to the said determination of the contents of fuel in the canister 22, the hydrocarbon content of the purge gas. Based on the hydrocarbon content of the purge gas, the throttle is controlled so that a combustible air/fuel mixture is provided to the catalytic converter.

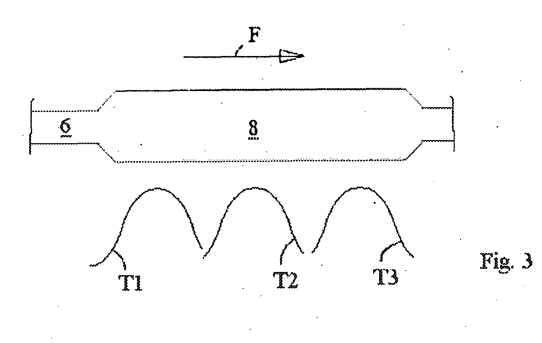

Referring to fig. 3, in which a gas flow direction is indicated with an arrow F, the throttle valve 10 is also used during the regeneration to control the location of a maximum temperature in the exhaust gas treatment device. By controlling the throttle valve 1 0 so that a relatively small air flow is provided, the air/fuel mixture will be combusted relatively far upstream in the catalytic converter 8. As a result, the temperature distribution in the catalytic converter, indicated in fig. 3 with the curve T1, will present a maximum relatively far upstream. By controlling the throttle valve 10 so that larger air flows are provided, the air/fuel mixture will be combusted further downstream in the catalytic converter 8. As a result, the temperature distribution in the catalytic converter, T2, T3, will present maximums further downstream, depending on the air flow. In other words, increasing the air flow will move the maximum temperature downstream.

Thus, the location of the maximum temperature can be changed, during the sulfur regeneration, which in turn makes it possible to obtain a particularly thorough regeneration, since it can be secured that the temperature is increased sufficiently for sulfur deposit removal throughout the entire catalytic converter.

As an alternative to, or in addition to a throttle valve 10, the air flow control means can comprise control means (not shown) for the inlet valve(s) 5 and/or the exhaust valve(s) 7, for example in the form of a variable valve timing (VVT) system and/or a cam profile shifting (CPS) system. Such inlet and/or exhaust valve control means can be used as an alternative or in addition to the throttle valve 10 for controlling the combustion in the catalytic converter 8 during the purge gas exhaust gas treatment device regeneration.

It should be noted that the purge gas supply pump 251 secures, during the purge gas exhaust gas treatment device regeneration, effective supply of purge gas even if the intake pressure is relative high due to the air flow being controlled so as to be relatively high,

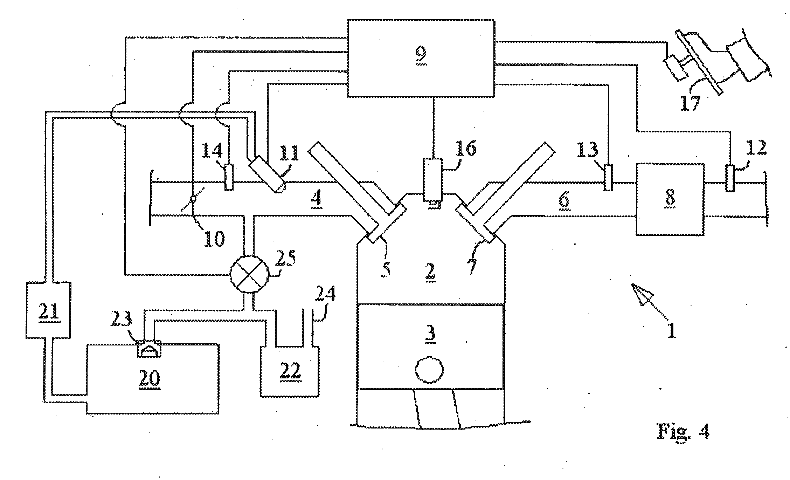

Fig. 4 shows a schematic view of parts of an engine system 1 according to an alternative embodiment of the invention. The system 1 is similar to the one described above with reference to fig. 1, except for that the canister 22 and the fuel tank 20 can communicate with the inlet duct 4 via supply control means in the form of a purge gas supply valve 25, which is controllable by the ECU 9.

Besides exhaust gas treatment device poisoning caused by sulfur, the invention is equally applicable to poisoning caused by other substances, such as phosphorus. In particular, the invention results in the catalyst average temperature being kept higher, and as a result, long term phosphorus poisoning can be reduced.

## Claims

1. A method for an exhaust gas treatment device (8) in an engine system comprising an internal combustion engine with at least one cylinder (2), the engine system further comprising fuel storage means (20), and a fuel vapor retainer (22), the method comprising allowing purge gas from the fuel vapor retainer (22) into at least one of the cylinders (2), **characterized in that** the method comprises performing a purge gas exhaust gas treatment device regeneration (207) in which the step of allowing purge gas from the fuel vapor retainer (22) into at least one of the cylinders (2) is included, the purge gas exhaust gas treatment device regeneration (207) further comprising inhibiting combustion in at least one of the cylinders (2) into which purge gas is allowed, the method further comprising controlling air flow control means (10) so as to control the combustion in the exhaust gas treatment device (8) during the purge gas exhaust gas treatment device regeneration (207).

2. A method according to claim 1, wherein the step of inhibiting combustion comprises controlling ignition means (16) at the cylinder (2) so that combustion is inhibited.

3. A method according to any of the preceding claims, wherein the engine comprises fuel injection means (11), the purge gas exhaust gas treatment device regeneration (207) being performed if the existence of at least one condition indicative of a fuel injection inhibition is determined (205).

4. A method according to claim 3, wherein the step of determining (205) the existence of at least one condition indicative of a fuel injection inhibition, comprises determining a value of control parameter corresponding to, or being related to a requested torque of the engine, and comparing the determined control parameter value with a control parameter threshold value, the determination of the existence of at least one condition indicative of a fuel injection inhibition being dependent on the comparison between the determined control parameter value and the control parameter threshold value.

5. A method according to any of the preceding claims, comprising estimating the contents of fuel in the vapor retainer (22) and determining, based on the estimation of the contents of fuel in the fuel vapor retainer (22), whether to perform the purge gas exhaust gas treatment device regeneration.

6. A method according to any of the preceding claims, comprising determining (208) during the purge gas exhaust gas treatment device regeneration (207) the temperature of the exhaust gas treatment device (8), and terminating (209) the purge gas exhaust gas treatment device regeneration (207) if it is determined (208) that the temperature of the exhaust gas treatment device (8) is above a predetermined temperature limit value.

7. A method according to any of the preceding claims, comprising determining (210) during the purge gas exhaust gas treatment device regeneration (207) a value of a control parameter corresponding to, or being related to a requested torque of the engine, the purge gas exhaust gas treatment device regeneration (207) being dependent on the control parameter value determination (210).

8. A method according to claim 7, comprising determining whether the control parameter value is above a predetermined threshold value, and terminating (209) the purge gas exhaust gas treatment device regeneration (207) if it is determined that the control parameter value is above the predetermined threshold value.

9. A method according to any of the preceding claims, wherein controlling the combustion in the exhaust gas treatment device (8) comprises controlling a location or a region of a maximum temperature in the exhaust gas treatment device (8).

10. A method according to any of the preceding claims, wherein allowing purge gas from the fuel vapor retainer (22) into at least one of the cylinders (2) comprises supply control means (25, 251) so as to allow purge gas from the fuel vapor retainer (22) to reach the engine.

11. A method according to claim 10, wherein the supply control means comprises a purge gas supply pump (251) adapted to pump purge gas to the engine.

12. An engine system comprising an internal combustion engine comprising at least one cylinder (2), the engine system turner comprising an exhaust gas treatment device (8), fuel storage means (20), and a fuel vapor retainer (22), and an engine control unit (9) adapted to control supply control means (25, 251) so as to selectively allow purge gas from the fuel vapor retainer (22) to reach the engine, the engine comprising air flow control means (10) controllable by the engine control unit (9), **characterized in that** the engine control unit (9) is adapted to control a purge gas exhaust treatment device regeneration, the engine control unit (9) being adapted to control, during the purge gas exhaust treatment device regeneration, the supply control means (25, 251) so as to allow purge gas from the fuel vapor retainer (22) into at least one of the cylinders (2), and to inhibit, during the purge gas exhaust treatment device regeneration, combustion in at least one of the cylinders (2) into which purge gas is allowed, the engine control unit (9) being adapted to control the air flow control means (10) so as to control the combustion in the exhaust gas treatment device (8) during the purge gas exhaust gas treatment device regeneration.

13. An engine system according to claim 13, wherein the engine comprises ignition means (16) at each cylinder (2), the engine control unit (9) being adapted to control the ignition means (16), during the purge gas exhaust treatment device regeneration, so that ignition is inhibited such that combustion is inhibited in the cylinder intro which purge gas is allowed.

14. An engine system according to any of the claims 12-13, wherein the engine comprises fuel injection means (11) controllable by the engine control unit (9), the engine control unit (9) being adapted to allow the purge gas exhaust gas treatment device regeneration (207) if the existence of at least one condition indicative of a fuel injection inhibition is determined.

15. An engine system according to any of the claims 12-14, wherein the engine control unit (9) is adapted to estimate the contents of fuel in the fuel vapor retainer (22) and to determine, based on the estimation of the contents of fuel in the fuel vapor retainer (22), whether to perform the purge gas exhaust gas treatment device regeneration.

16. An engine system according to any of the claims 12-15, wherein the engine control unit (9) is adapted to determine, during the purge gas exhaust gas treatment device regeneration, the temperature of the exhaust gas treatment device (8), and to terminate the purge gas exhaust gas treatment device regeneration if it is determined that the temperature of the exhaust gas treatment device (8) is above a predetermined temperature limit value.

17. An engine system according to any of the claims 12-16, wherein the engine control unit (9) is adapted to determine, during the purge gas exhaust gas treatment device regeneration, a value of a control parameter corresponding to, or being related to a requested torque of the engine, and to control the purge gas exhaust gas treatment device regeneration in dependence on the control parameter value.

18. An engine system according to claim 17, wherein the engine control unit (9) is adapted to determine whether the control parameter value is above a predetermined threshold value, and to terminate the purge gas exhaust gas treatment device regeneration if it is determined that the control parameter value is above the predetermined threshold value.

19. An engine system according to any of the claims (12-18), wherein the engine control unit (9) is adapted to control the air flow control means (10) so as to control a locution or a region of a maximum temperature in the exhaust gas treatment device (8).

20. An engine system according to any of the claims 12-19, wherein the supply control means comprises a purge gas supply pump (251) adapted to pump purge gas to the engine.

## Patentansprüche

1. Verfahren für eine Abgasbehandlungsvorrichtung (8) in einem Motorsystem, das einen Verbrennungsmotor mit mindestens einem Zylinder (2) umfasst, wobei das Motorsystem ferner Kraftstoffvorratsmittel (20) und ein Kraftstoffdampfaufnahmegefäß (22) umfasst, wobei das Verfahren das Erlauben umfasst, Spülgas von dem Kraftstoffdampfaufnahmegefäß (22) in mindestens einen der Zylinder (2) gelangen zu lassen, **dadurch gekennzeichnet, dass** das Verfahren ein Durchführen einer Spülgasregenerierung (207) einer Abgasbehandlungsvorrichtung umfasst, in dem der Schritt des Erlaubens, Spülgas von dem Kraftstoffdampfaufnahmegefäß (22) in mindestens einen der Zylinder (2) gelangen zu lassen, enthalten ist, wobei die Spülgasregenerierung (207) der Abgasbehandlungsvorrichtung ferner ein Hemmen der Verbrennung in mindestens einem der Zylinder (2), in dem Spülgas erlaubt ist, umfasst, wobei das Verfahren ferner das Steuern von Luftdurchfluss-Steuervorrichtungen (10) umfasst, um die Verbrennung in der Abgasbehandlungsvorrichtung (8) während der Spülgasregenerierung (207) der Abgasbehandlungsvorrichtung zu steuern.

2. Verfahren nach Anspruch 1, wobei der Schritt des Hemmens der Verbrennung ein Steuern der Zündmittel (16) an dem Zylinder (2) umfasst, so dass die Verbrennung gehemmt wird.

3. Verfahren nach einem der vorhergehenden Ansprüche, wobei der Motor Kraftstoffeinspritzmittel (11) umfasst, wobei die Spülgasregenerierung (207) der Abgasbehandlungsvorrichtung durchgeführt wird, wenn die Existenz von mindestens einer Bedingung, die eine Kraftstoffeinspritzhemmung angibt, festgestellt ist (205).

4. Verfahren nach Anspruch 3, wobei der Schritt des Feststellens (205) der Existenz von mindestens einer Bedingung, die eine Kraftstoffeinspritzhemmung angibt, ein Bestimmen eines Wertes eines Steuerparameters, der einem angeforderten Drehmoment des Motors entspricht oder mit diesem in Beziehung steht, und ein Vergleichen des bestimmten Steuerparameterwerts mit einem Steuerparameterschwellenwert umfasst, wobei die Feststellung der Existenz von mindestens einer Bedingung, die eine Kraftstoffeinspritzhemmung angibt, von dem Vergleich zwischen dem bestimmten Steuerparameterwert und dem Steuerparameterschwellenwert abhängt.

5. Verfahren nach einem der vorhergehenden Ansprüche, das ein Schätzen der Kraftstoffinhalte in dem Kraftstoffdampfaufnahmegefäß (22) und auf der Basis der Schätzung der Kraftstoffinhalte in dem Kraftstoffdampfaufnahmegefäß (22) ein Bestimmen, ob die Spülgasregenerierung der Abgasbehandlungsvorrichtung durchzuführen ist, umfasst.

6. Verfahren nach einem der vorhergehenden Ansprüche, das ein Bestimmen (208) der Temperatur der Abgasbehandlungsvorrichtung (8) während der Spülgasregenerierung (207) der Abgasbehandlungsvorrichtung und ein Beenden (209) der Spülgasregenerierung (207) der Abgasbehandlungsvorrichtung dann, wenn festgestellt wird, dass die Temperatur der Abgasbehandlungsvorrichtung (8) über einem vorbestimmten Temperaturgrenzwert liegt, umfasst.

7. Verfahren nach einem der vorhergehenden Ansprüche, das ein Bestimmen (210) eines Wertes eines Steuerparameters, der einem angeforderten Drehmoment des Motors entspricht oder mit diesem in Beziehung steht, während der Spülgasregenerierung (207) der Abgasbehandlungsvorrichtung umfasst, wobei die Spülgasregenerierung (207) der Abgasbehandlungsvorrichtung von der Bestimmung (210) des Steuerparameterwerts abhängt.

8. Verfahren nach Anspruch 7, das ein Bestimmen, ob der Parameterwert über einem vorbestimmten Schwellenwert liegt, und ein Beenden (209) der Spülgasregenerierung (207) der Abgasbehandlungsvorrichtung dann, wenn festgestellt wird, dass der Steuerparameterwert über dem vorbestimmten Schwellenwert liegt, umfasst.

9. Verfahren nach einem der vorhergehenden Ansprüche, wobei das Steuern der Verbrennung in der Abgasbehandlungsvorrichtung (8) ein Steuern eines Ortes oder eines Bereiches einer maximalen Temperatur in der Abgasbehandlungsvorrichtung (8) umfasst.

10. Verfahren nach einem der vorhergehenden Ansprüche, wobei das Erlauben, Spülgas von dem Kraftstoffdampfaufnahmegefäß (22) in mindestens einen der Zylinder (2) gelangen zu lassen, ein Steuern der Zuführungssteuerungsmittel (25, 251) umfasst, um zu erlauben, dass Spülgas von dem Kraftstoffdampfaufnahmegefäß (22) den Motor erreicht.

11. Verfahren nach Anspruch 10, wobei die Zuführungssteuerungsmittel eine Spülgaszuführungspumpe (251) umfassen, die geeignet ist, Spülgas in den Motor zu pumpen.

12. Motorsystem, das einen Verbrennungsmotor umfasst, der mindestens einen Zylinder (2) umfasst, wobei das Motorsystem ferner eine Abgasbehandlungsvorrichtung (8), Kraftstoffvorratsmittel (20) und ein Kraftstoffdampfaufnahmegefäß (22) und eine Motorsteuereinheit (9) umfasst, die geeignet ist, Zuführungssteuerungsmittel (25, 251) zu steuern, um wahlweise zu erlauben, dass Spülgas von dem Kraftstoffdampfaufnahmegefäß (22) den Motor erreicht, wobei der Motor Luftdurchfluss-Steuervorrichtungen (10) umfasst, die von der Motorsteuereinheit (9) gesteuert werden können, **dadurch gekennzeichnet, dass** die Motorsteuereinheit (9) geeignet ist, eine Spülgasregenerierung einer Abgasbehandlungsvorrichtung zu steuern, wobei die Motorsteuereinheit (9) geeignet ist, während der Spülgasregenerierung einer Abgasbehandlungsvorrichtung die Zuführungssteuerungsmittel (25, 251) zu steuern, um zu erlauben, Spülgas von dem Kraftstoffdampfaufnahmegefäß (22) in mindestens einen der Zylinder (2) gelangen zu lassen, und um während der Spülgasregenerierung einer Abgasbehandlungsvorrichtung die Verbrennung in mindestens einem der Zylinder (2), in dem Spülgas erlaubt ist, zu hemmen, wobei die Motorsteuereinheit (9) geeignet ist, die Luftdurchfluss-Steuervorrichtungen (10) zu steuern, um die Verbrennung in der Abgasbehandlungsvorrichtung (8) während der Spülgasregenerierung (207) der Abgasbehandlungsvorrichtung zu steuern.

13. Motorsystem nach Anspruch 12, wobei der Motor an jedem Zylinder (2) Zündmittel (16) umfasst, wobei die Motorsteuereinheit (9) geeignet ist, während der Spülgasregenerierung einer Abgasbehandlungsvorrichtung die Zündmittel (16) zu steuern, so dass die Zündung derart gehemmt ist, dass die Verbrennung in dem Zylinder (2), in dem Spülgas erlaubt ist, gehemmt wird.

14. Motorsystem nach einem der Ansprüche 12 bis 13, wobei der Motor Kraftstoffeinspritzmittel (11) umfasst, die von der Motorsteuereinheit (9) steuerbar sind, wobei die Motorsteuereinheit (9) geeignet ist, die Spülgasregenerierung (207) einer Abgasbehandlungsvorrichtung zu erlauben, wenn die Existenz von mindestens einer Bedingung, die eine Kraftstoffeinspritzhemmung angibt, festgestellt ist.

15. Motorsystem nach einem der Ansprüche 12 bis 14, wobei die Motorsteuereinheit (9) geeignet ist, die Kraftstoffinhalte in dem Kraftstoffdampfaufnahmegefäß (22) zu schätzen und auf der Basis der Schätzung der Kraftstoffinhalte in dem Kraftstoffdampfaufnahmegefäß (22) zu bestimmen, ob die Spülgasregenerierung der Abgasbehandlungsvorrichtung durchzuführen ist.

16. Motorsystem nach einem der Ansprüche 12 bis 15, wobei die Motorsteuereinheit (9) geeignet ist, während der Spülgasregenerierung der Abgasbehandlungsvorrichtung die Temperatur der Abgasbehandlungsvorrichtung (8) zu bestimmen und die Spülgasregenerierung der Abgasbehandlungsvorrichtung zu beenden, wenn festgestellt wird, dass die Temperatur der Abgasbehandlungsvorrichtung (8) über einem vorbestimmten Temperaturgrenzwert liegt.

17. Motorsystem nach einem der Ansprüche 12 bis 16, wobei die Motorsteuereinheit (9) geeignet ist, während der Spülgasregenerierung der Abgasbehandlungsvorrichtung einen Wert eines Steuerparameters zu bestimmen, der einem angeforderten Drehmoment des Motors entspricht oder mit diesem in Beziehung steht, und die Spülgasregenerierung der Abgasbehandlungsvorrichtung in Abhängigkeit von dem Steuerparameterwert zu steuern.

18. Motorsystem nach Anspruch 17, wobei die Motorsteuereinheit (9) geeignet ist, zu bestimmen, ob der Steuerparameterwert über einem vorbestimmten Schwellenwert liegt, und die Spülgasregenerierung der Abgasbehandlungsvorrichtung dann, wenn festgestellt wird, dass der Steuerparameterwert über dem vorbestimmten Schwellenwert liegt, zu beenden.

19. Motorsystem nach einem der Ansprüche 12 bis 18, wobei die Motorsteuereinheit (9) geeignet ist, die Luftdurchfluss-Steuervorrichtungen (10) zu steuern, um einen Ort oder einen Bereich einer maximalen Temperatur in der Abgasbehandlungsvorrichtung (8) zu steuern.

20. Motorsystem nach einem der Ansprüche 12 bis 19, wobei die Zuführungssteuerungsmittel eine Spülgaszuführungspumpe (251) umfassen, die geeignet ist, Spülgas in den Motor zu pumpen.

## Revendications

1. Procédé destiné à un dispositif de traitement de gaz d'échappement (8) dans un système motorisé comprenant un moteur à combustion interne avec au moins un cylindre (2), le système motorisé comprenant en outre des moyens de stockage de carburant (20) et un dispositif de rétention des vapeurs de carburant (22), le procédé comprenant le passage du gaz de purge du dispositif de rétention des vapeurs de carburant (22) dans au moins un des cylindres (2), **caractérisé en ce que** le procédé comprend la régénération (207) du gaz de purge du dispositif de traitement de gaz d'échappement dans laquelle est incluse l'étape de passage du gaz de purge du dispositif de rétention des vapeurs de carburant (22) dans au moins un des cylindres (2), la régénération (207) du gaz de purge du dispositif de traitement de gaz d'échappement comprenant en outre l'inhibition de la combustion dans au moins un des cylindres (2) dans lequel a été admis le gaz de purge, le procédé comprenant en outre la commande de moyens de contrôle de flux d'air (10) afin de contrôler la combustion dans le dispositif de traitement de gaz d'échappement (8) lors de la régénération (207) du gaz de purge du dispositif de traitement de gaz d'échappement.

2. Procédé selon la revendication 1, dans lequel l'étape consistant à inhiber la combustion comprend le contrôle de moyens d'allumage (16) au niveau du cylindre (2) afin d'inhiber la combustion.

3. Procédé selon l'une quelconque des revendications précédentes, dans lequel le moteur comprend des moyens d'injection de carburant (11), la régénération (207) du gaz de purge du dispositif de traitement de gaz d'échappement étant effectuée si on détermine (205) l'existence d'au moins une condition indiquant l'inhibition de l'injection de carburant.

4. Procédé selon la revendication 3, dans lequel l'étape consistant à déterminer (205) l'existence d'au moins une condition indiquant l'inhibition de l'injection de carburant comprend la détermination d'une valeur d'un paramètre de contrôle correspondant à ou en rapport avec le couple moteur requis, et la comparaison de la valeur du paramètre de contrôle déterminée avec une valeur seuil du paramètre de contrôle ainsi que la détermination de l'existence d'au moins une condition indiquant l'inhibition de l'injection de carburant dépendant de la comparaison entre la valeur du paramètre de contrôle déterminée et la valeur seuil du paramètre de contrôle.

5. Procédé selon l'une quelconque des revendications précédentes, comprenant l'estimation de la quantité de carburant dans le dispositif de rétention des vapeurs de carburant (22) et le fait de déterminer, en se basant sur l'estimation de la quantité de carburant dans le dispositif de rétention des vapeurs de carburant (22), s'il faut ou non effectuer la régénération du gaz de purge du dispositif de traitement de gaz d'échappement.

6. Procédé selon l'une quelconque des revendications précédentes, comprenant la détermination (208) de la température du dispositif de traitement de gaz d'échappement (8) pendant la régénération (207) du gaz de purge du dispositif de traitement de gaz d'échappement et la fin (209) de la régénération (207) du gaz de purge du dispositif de traitement de gaz d'échappement si l'on détermine (208) que la température du dispositif de traitement de gaz d'échappement (8) est au-dessus d'une valeur limite de température prédéterminée.

7. Procédé selon l'une quelconque des revendications précédentes, comprenant la détermination (210), au cours de la régénération (207) du gaz de purge du dispositif de traitement de gaz d'échappement, d'une valeur de paramètre de contrôle correspondant à ou en rapport avec le couple moteur requis, la régénération (207) du gaz de purge du dispositif de traitement de gaz d'échappement dépendant de la détermination (210) de la valeur du paramètre de contrôle.

8. Procédé selon la revendication 7, comprenant le fait de déterminer si la valeur du paramètre de contrôle est ou non au-dessus d'une valeur seuil prédéterminée, et de terminer (209) la régénération (207) du gaz de purge du dispositif de traitement de gaz d'échappement si l'on détermine que la valeur du paramètre de contrôle est au-dessus de la valeur seuil prédéterminée.

9. Procédé selon l'une quelconque des revendications précédentes, dans lequel le contrôle de la combustion dans le dispositif de traitement de gaz d'échappement (8) comprend le contrôle d'un point ou d'une zone de température maximale dans le dispositif de traitement de gaz d'échappement (8).

10. Procédé selon l'une quelconque des revendications précédentes, dans lequel le passage du gaz de purge du dispositif de rétention des vapeurs de carburant (22) dans au moins un des cylindres (2) comprend la commande de moyens de contrôle d'alimentation (25, 251) pour permettre au gaz de purge du dispositif de rétention des vapeurs de carburant (22) d'atteindre le moteur.

11. Procédé selon la revendication 10, dans lequel les moyens de contrôle d'alimentation comprennent une pompe d'alimentation (251) en gaz de purge adaptée pour pomper le gaz de purge jusque dans le moteur.

12. Système motorisé comprenant un moteur à combustion interne comprenant au moins un cylindre (2), le système motorisé comprenant en outre un dispositif de traitement de gaz d'échappement (8), des moyens de stockage de carburant (20) et un dispositif de rétention des vapeurs de carburant (22) ainsi qu'une unité de commande moteur (9) adaptée pour commander des moyens de contrôle de l'alimentation (25, 251) afin de permettre sélectivement au gaz de purge du dispositif de rétention des vapeurs de carburant (22) d'atteindre le moteur, le moteur comprenant des moyens de contrôle de flux d'air (10) commandables par l'unité de commande moteur (9), **caractérisé en ce que** l'unité de commande moteur (9) est adaptée pour contrôler la régénération du gaz de purge du dispositif de traitement de gaz d'échappement, l'unité de commande moteur (9) étant adaptée pour commander, lors de la régénération du gaz de purge du dispositif de traitement de gaz d'échappement, les moyens de contrôle d'alimentation (25, 251) afin de permettre le passage du gaz de purge du dispositif de rétention des vapeurs de carburant (22) dans au moins l'un des cylindres (2) et d'inhiber, lors de la régénération du gaz de purge du dispositif de traitement de gaz d'échappement, la combustion dans au moins un des cylindres (2) dans lequel a été admis le gaz de purge, l'unité de commande moteur (9) étant adaptée pour commander les moyens de contrôle de flux d'air (10) afin de contrôler la combustion dans le dispositif de traitement de gaz d'échappement (8) lors de la régénération du gaz de purge du dispositif de traitement de gaz d'échappement.

13. Système motorisé selon la revendication 12, dans lequel le moteur comprend des moyens d'allumage (16) à chaque cylindre (2), l'unité de commande moteur (9) étant adaptée pour commander les moyens d'allumage (16), lors de la régénération du gaz de purge du dispositif de traitement de gaz d'échappement, de manière à inhiber l'allumage afin que la combustion soit inhibée dans le cylindre (2) dans lequel a été admis le gaz de purge.

14. Système motorisé selon l'une quelconque des revendications 12 et 13, dans lequel le moteur comprend des moyens d'injection de carburant (11) commandables par l'unité de commande moteur (9), l'unité de commande moteur (9) étant adaptée pour permettre la régénération (207) du gaz de purge du dispositif de traitement de gaz d'échappement s'il existe au moins une condition indiquant qu'une inhibition de l'injection du carburant est déterminée.

15. Système motorisé selon l'une quelconque des revendications 12 à 14, dans lequel l'unité de commande moteur (9) est adaptée pour estimer la quantité de carburant dans le dispositif de rétention des vapeurs de carburant (22) et pour déterminer, en se basant sur les estimations de la quantité de carburant dans le dispositif de rétention des vapeurs de carburant (22), s'il faut ou non effectuer la régénération du gaz de purge du dispositif de traitement de gaz d'échappement.

16. Système motorisé selon l'une quelconque des revendications 12 à 15, dans lequel l'unité de commande moteur (9) est adaptée pour déterminer, lors de la régénération du gaz de purge du dispositif de traitement de gaz d'échappement, la température du dispositif de traitement de gaz d'échappement (8) et pour finir la régénération du gaz de purge du dispositif de traitement de gaz d'échappement si l'on détermine que la température du dispositif de traitement de gaz d'échappement (8) est supérieure à une valeur de température limite prédéterminée.

17. Système motorisé selon l'une quelconque des revendications 12 à 16, dans lequel l'unité de commande moteur (9) est adaptée pour déterminer, lors de la régénération du gaz de purge du dispositif de traitement de gaz d'échappement, une valeur d'un paramètre de contrôle correspondant à ou en rapport avec un couple moteur requis et pour commander la régénération du gaz de purge du dispositif de traitement de gaz d'échappement en fonction de la valeur du paramètre de contrôle.

18. Système motorisé selon la revendication 17, dans lequel l'unité de commande moteur (9) est adaptée pour déterminer si la valeur du paramètre de contrôle est ou non au-dessus d'une valeur seuil prédéterminée, et pour terminer la régénération du gaz de purge du dispositif de traitement de gaz d'échappement si l'on détermine que la valeur du paramètre de contrôle est au-dessus de la valeur seuil prédéterminée.

19. Système motorisé selon l'une quelconque des revendications 12 à 18, dans lequel l'unité de commande moteur (9) est adaptée pour commander les moyens de contrôle de flux d'air (10) afin de contrôler un point ou une zone de température maximale dans le dispositif de traitement de gaz d'échappement (8).

20. Système motorisé selon l'une quelconque des revendications 12 à 19, dans lequel les moyens de contrôle d'alimentation comprennent une pompe d'alimentation (251) en gaz de purge adaptée pour pomper le gaz de purge jusque dans le moteur.
